# EUROPEAN PATENT APPLICATION

(11) **EP 4 787 923 A1**
(43) Date of publication of application: **05.08.2026**
(21) Application number: 23953402.7
(22) Date of filing: 26.09.2023
(51) Int. Cl.: H04W 24/02, H04L 41/14

(54) **WIRELESS COMMUNICATION METHODS, TERMINAL DEVICES, ACCESS NETWORK DEVICES AND CORE NETWORK DEVICES**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Mewburn Ellis LLP
(86) International application number: PCT/CN2023/121555
(87) International publication number: WO 2025/065242

(57) **Abstract**

A wireless communication method, a terminal device, an access network device, and a core network device are provided. The method includes the following. A terminal device sends first information to a network device. The first information includes a first identifier, and the first identifier is associated with model deployment information of the terminal device. In embodiments of the disclosure, by introducing an identifier associated with model deployment information, the indication of the model deployment information of the terminal device can be simplified.

## Description

### TECHNICAL FIELD

This disclosure relates to the field of communication technology, and more specifically to a wireless communication method, a terminal device, an access network device, and a core network device.

### BACKGROUND

With the development of technology, one or more models are deployed on a terminal device. How to indicate model deployment information of the terminal device to a network device is a problem to be solved.

### SUMMARY

A wireless communication method, a terminal device, an access network device, and a core network device are provided in embodiments of the disclosure. Various aspects involved in embodiments of the disclosure will be introduced in detail below.

In a first aspect, a wireless communication method is provided. The method includes the following. A terminal device sends first information to a network device. The first information includes a first identifier, and the first identifier is associated with model deployment information of the terminal device.

In a second aspect, a wireless communication method is provided. The method includes the following. A first core network device receives first information sent by a terminal device. The first information includes a first identifier, and the first identifier is associated with model deployment information of the terminal device.

In a third aspect, a wireless communication method is provided. The method includes the following. A first access network device receives third information sent by a first core network device. The third information includes a fourth identifier, information contained in the fourth identifier is a subset of information contained in a first identifier, and the first identifier is associated with model deployment information of a terminal device.

In a fourth aspect, a wireless communication method is provided. The method includes the following. A first access network device receives first information sent by a terminal device. The first information includes a first identifier, and the first identifier is associated with model deployment information of the terminal device.

In a fifth aspect, a wireless communication method is provided. The method includes the following. A first core network device receives sixth information sent by a first access network device. The sixth information includes a seventh identifier, information contained in the seventh identifier is a subset of information contained in a first identifier, and the first identifier is associated with model deployment information of a terminal device.

In a sixth aspect, a terminal device is provided. The terminal device includes a communication module. The communication module is configured to send first information to a network device. The first information includes a first identifier, and the first identifier is associated with model deployment information of the terminal device.

In a seventh aspect, a core network device is provided. The core network device is a first core network device, and the first core network device includes a communication module. The communication module is configured to receive first information sent by a terminal device. The first information includes a first identifier, and the first identifier is associated with model deployment information of the terminal device.

In an eighth aspect, an access network device is provided. The access network device is a first access network device, and the first access network device includes a communication module. The communication module is configured to receive third information sent by a first core network device. The third information includes a fourth identifier, information contained in the fourth identifier is a subset of information contained in a first identifier, and the first identifier is associated with model deployment information of a terminal device.

In a ninth aspect, an access network device is provided. The access network device is a first access network device, and the first access network device includes a communication module. The communication module is configured to receive first information sent by a terminal device. The first information includes a first identifier, and the first identifier is associated with model deployment information of the terminal device.

In a tenth aspect, a core network device is provided. The core network device is a first core network device, and the first core network device includes a communication module. The communication module is configured to receive sixth information sent by a first access network device. The sixth information includes a seventh identifier, information contained in the seventh identifier is a subset of information contained in a first identifier, and the first identifier is associated with model deployment information of a terminal device.

In an eleventh aspect, a terminal device is provided. The terminal device includes a transceiver, a memory, and a processor. The memory is configured to store a program, and the processor is configured to invoke the program stored in the memory and control the transceiver to receive or send a signal, to cause the terminal device to perform the method described in the first aspect.

In a twelfth aspect, a core network device is provided. The core network device includes a transceiver, a memory, and a processor. The memory is configured to store a program, and the processor is configured to invoke the program stored in the memory and control the transceiver to receive or send a signal, to cause the core network device to perform the method described in any one of the second aspect and the fifth aspect.

In a thirteenth aspect, an access network device is provided. The access network device includes a transceiver, a memory, and a processor. The memory is configured to store a program, and the processor is configured to invoke the program stored in the memory and control the transceiver to receive or send a signal, to cause the access network device to perform the method described in any one of the third aspect and the fourth aspect.

In a fourteenth aspect, an apparatus is provided. The apparatus includes a processor. The processor is configured to invoke a program stored in a memory, to cause the apparatus to perform the method described in any one of the first aspect to the fifth aspect.

In a fifteenth aspect, a chip is provided. The chip includes a processor. The processor is configured to invoke a program stored in a memory, to cause a device equipped with the chip to perform the method described in any one of the first aspect to the fifth aspect.

In a sixteenth aspect, a computer-readable storage medium is provided. The computer-readable storage medium is configured to store a program which causes a computer to perform the method described in any one of the first aspect to the fifth aspect.

In a seventeenth aspect, a computer program product is provided. The computer program product includes a program which causes a computer to perform the method described in any one of the first aspect to the fifth aspect.

In an eighteenth aspect, a computer program is provided. The computer program causes a computer to perform the method described in any one of the first aspect to the fifth aspect.

In embodiments of the disclosure, by introducing an identifier associated with model deployment information, the indication of model deployment information of a terminal device can be simplified.

### BRIEF DESCRIPTION OF THE DRAWINGS

FIG. 1 is a diagram of an example system architecture of a wireless communication system to which embodiments of the disclosure are applicable.
FIG. 2 is a schematic flowchart of a wireless communication method provided in embodiments of the disclosure.
FIG. 3 is a schematic flowchart of a possible implementation of FIG. 2.
FIG. 4 is another schematic flowchart of a possible implementation of FIG. 2.
FIG. 5 is a schematic structural diagram of a terminal device provided in embodiments of the disclosure.
FIG. 6 is a schematic structural diagram of a core network device provided in an embodiment of the disclosure.
FIG. 7 is a schematic structural diagram of an access network device provided in an embodiment of the disclosure.
FIG. 8 is a schematic structural diagram of an access network device provided in another embodiment of the disclosure.
FIG. 9 is a schematic structural diagram of a core network device provided in another embodiment of the disclosure.
FIG. 10 is a schematic structural diagram of an apparatus to which embodiments of the disclosure are applicable.

### DETAILED DESCRIPTION

The following will describe technical solutions in the disclosure with reference to the accompanying drawings.

### Communication system architecture

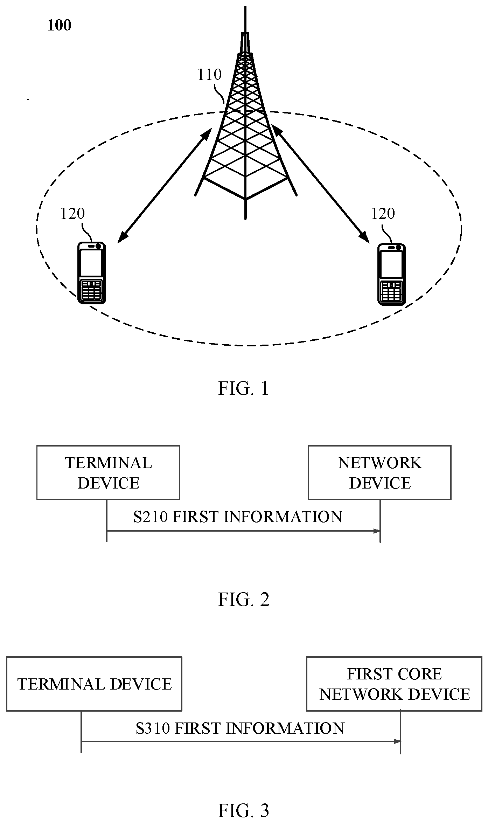

FIG. 1 is a diagram of an example system architecture of a wireless communication system 100 to which embodiments of the disclosure are applicable. The wireless communication system 100 may include a network device 110 and a terminal device 120. The network device 110 may be a device that communicates with the terminal device 120. The network device 110 may provide communication coverage for a specific geographic region and may communicate with the terminal device 120 located within that coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be located in the network coverage area of the network device 110, all be located out of the network coverage area of the network device 110, or some may be in the coverage area of the network device 110 while others are out of the coverage area of the network device 110. Embodiments of the disclosure are not limited in this regard.

Optionally, the wireless communication system 100 may further include other network entities such as a network controller, a mobility management entity, etc. Embodiments of the disclosure are not limited in this regard.

It may be understood that, the technical solutions of embodiments of the disclosure can be applied to various communication systems, for example: the fifth generation (5G) system or new radio (NR), long term evolution (LTE) system, LTE frequency division duplex (FDD) system, LTE time division duplex (TDD), etc. The technical solutions provided in this disclosure can also be applied to future communication systems, such as the sixth-generation mobile communication system, satellite communication systems, and so on.

The terminal device in embodiments of the disclosure may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user device. The terminal device in embodiments of the disclosure may be a device that provides voice and/or data connectivity to users and can be used to connect people, objects, and machines, such as handheld devices with wireless connectivity, in-vehicle devices, etc. The terminal devices in embodiments of the disclosure may be mobile phones, tablets (Pad), laptop computers, handheld computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, wireless terminals in smart homes, and so on. Optionally, the UE may act as a base station. For example, the UE may act as a scheduling entity that provides sidelink signals between UEs in vehicle-to-everything (V2X) or device-to-device (D2D) communications. For example, cellular phones and automobiles may communicate with each other using sidelink signals. Cellular phones and smart home devices may communicate directly without relaying communication signals through a base station.

The network device in embodiments of the disclosure may be a device for communicating with the terminal device and may also be referred to as an access network device or a radio access network (RAN) device, such as a base station. The network device in embodiments of the disclosure may be an RAN node (or device) that connects the terminal device to the wireless network. The base station may broadly cover various names or be interchangeable with the following names: NodeB, evolved NodeB (eNB), next-generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, micro base station, relay node, donor node, or similar, or a combination thereof. The base station may also refer to a communication module, modem, or chip installed within the aforementioned devices or apparatuses. The base station may also be a mobile switching center, a device that performs base station functions in D2D, V2X, machine-to-machine (M2M) communications, a network-side device in a 6G network, a device that performs base station functions in future communication systems, etc. The base station may support networks using the same or different access technologies. There is no limitation on the specific technology and specific device form used by the network device in embodiments of the disclosure.

The base station may be fixed or mobile. For example, a helicopter or drone may be configured to act as a mobile base station, with one or more cells moving according to the position of the mobile base station. In other examples, a helicopter or drone may be configured to act as a device that communicates with another base station.

In some deployments, the network device in embodiments of the disclosure may refer to a CU or DU, or the network device may include a CU and a DU. The gNB may also include an AAU.

The network device and the terminal device may be deployed on land, including indoors or outdoors, handheld or vehicle-mounted; on water; or on aircraft, balloons, and satellites in the air. In embodiments of the disclosure, there is no limitation on the scenario in which the network device and the terminal device are located.

It may be understood that, all or some of functions of the communication device in the disclosure may also be implemented by a software function run on hardware, or may be implemented by a virtualization function instantiated on a platform (for example, a cloud platform).

### Definition of capability information of a terminal device in a communication system

The communication system (for example, 5G) has numerous functions. Some of the functions are mandatory for the terminal device, but most of the functions are optional for the terminal device. The terminal device generally indicates, through capability information reporting, optional functions supported by the terminal device, and different functions may be indicated via different capability information fields. Specific capability meanings and coding locations of all capability information fields in the capability information of the terminal device are pre-defined by a protocol. In other words, if a new device capability needs to be indicated by the terminal device (for example, a new optional function is supported by the terminal device), a coding rule for the new device capability needs to be defined through protocol pre-definition (i.e., pre-definition of a specific capability meaning and a coding location of this capability information field). Otherwise, a network device is unable to understand a newly-defined capability of the terminal device.

The number (quantity) and/or type of models (for example, artificial intelligence (AI) models) actually deployed on the terminal device may change dynamically (for example, software and/or hardware of the terminal device is updated). If the terminal device notifies the network device of a change status of model deployment information of the terminal device through capability information reporting, protocol pre-definition is first required before updated capability information can be reported. For one thing, discussion in a standardization process is required for defining a new terminal device capability. When there are inconsistencies in viewpoints of different companies, a new terminal device model capability required for some terminal device vendors or chip vendors may not be introduced. As a result, the research and development process of these terminal devices or chips is constrained by the standard discussion process (i.e., in this manner, there is no product upgrade without implementation of a standard, which does not align with the commercial interests of vendors). For another, the model deployment update of a terminal device vendor or chip vendor may be only an individual commercialization behavior of a corresponding vendor. Through the standardization process, forcing all terminal device vendors or chip vendors to make corresponding capability information update neither conforms to the reality of commercial competition nor helps protect the independent innovation of individual vendors.

From another perspective, if the above update of the model deployment information of the terminal device is carried out purely based on implementation, a huge challenge will be brought for the network device or operator to update the model deployment information. This is because the network device or operator needs to obtain, based on implementation, a model deployment update status of each terminal device vendor or chip vendor accessing the network, or even a model deployment update status of each terminal device (and also needs to consider subsequent information update). In a sense, the network device or operator is difficult to satisfy the above requirements and lacks the motivation to do so, because a large amount of offline information exchange requires additional manpower and material resources, which is obviously not a manner that network device vendors or operators are willing to undertake. Therefore, a naive implementation solution cannot well solve the above problem of information exchange.

Based on the above analysis, in terms of standards, there is a need for a manner for indicating or updating the model deployment information in consideration of both the terminal device vendors (and/or chip vendors) and network vendors (and/or operators). This disclosure is intended to overcome shortcomings of the above solutions.

### Embodiment 1:

FIG. 2 is a schematic flowchart of a wireless communication method provided in embodiment 1 of the disclosure. The method in FIG. 2 may be performed by a terminal device and a network device.

The network device mentioned in FIG. 2 may be an access network device or a core network device. For example, when the network device is an access network device, the access network device may be any one of: a base station (for example, gNB), a centralized unit (CU), a DU, a centralized unit-control plane (CU-CP), and a centralized unit-user plane (CU-UP). For example, when the network device is a core network device, the core network device is any one of: a location management function (LMF) network element, a network slice selection function (NSSF), an authentication server function (AUSF), unified data management (UDM), an access and mobility management function (AMF), a session management function (SMF), a policy control function (PCF), a user plane function (UPF), a sensing function (SF), a network data analytics function (NWDAF), and an AI function management entity.

As illustrated in FIG. 2, at S210, a terminal device sends first information to a network device. Accordingly, the network device receives the first information sent by the terminal device. The first information includes a first identifier. The first identifier is associated with model deployment information of the terminal device. In other words, the first identifier is used for determining a model deployment status of the terminal device.

It may be noted that, each model mentioned in embodiments of the disclosure may refer to an AI model and/or a machine learning (ML) model.

The model deployment information of the terminal device may indicate the model deployment status of the terminal device. For example, the model deployment information of the terminal device may indicate one or more models that have been deployed on the terminal device. Alternatively, the model deployment information of the terminal device may indicate information of a model(s) actually available to the terminal device.

In some implementations, the first identifier is associated with one or more of: a hardware configuration of the terminal device; a software configuration of the terminal device; and a set of models supported by the terminal device.

In some implementations, the first identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

According to embodiments of the disclosure, for one thing, from the perspective of a terminal device vendor or chip vendor, the update of deployment information of models supported by the terminal device does not rely on the enhancement of a standard protocol. The first information only provides one or more logical identifiers, and model deployment information associated with each logical identifier is not fixed. The terminal device or a model provider may dynamically change the content of model deployment information associated with a logical identifier at any time based on an inter-vendor protocol. This method indirectly provides the model deployment information of the terminal device (where the network device may determine associated model deployment information based on a logical identifier provided by the terminal device), so that the network device performs corresponding management operations such as model activation, model deactivation, and model switching for a specific terminal device. In addition, this method makes it possible to dynamically update the content of the model deployment information associated with the logical identifier at a commercial level, which is convenient for a product developer to provide product upgrade of a non-standard level and respond promptly to a demand of a user for product experience improvement.

For another, from the perspective of a network device vendor or operator, the solution provided in embodiments of the disclosure avoids a cost burden on the network device vendor or operator caused by the use of a purely implementation-based manner for obtaining the deployment information of models supported by the terminal device. This is because the use of the purely implementation-based manner for obtaining the deployment information of models supported by the terminal device means that the network device vendor or operator needs to invest a lot of manpower and material resources in obtaining and maintaining the above information offline, or even needs to obtain and maintain the model deployment information according to a granularity of the terminal device. Compared with a logical identifier-based mapping manner, the purely implementation-based manner involves higher costs. Therefore, the logical identifier-based manner for providing the model deployment information not only indirectly provides the model deployment information of the terminal device to the network device vendor or operator (where the network device may determine associated model deployment information based on a logical identifier provided by the terminal device), so that the network device performs corresponding model management operations for a specific terminal device, but also reduces network operating costs compared with the implementation-based manner for obtaining the model deployment information.

As mentioned above, the network device in FIG. 2 may be the core network device or the access network device. As an example, possible implementations of embodiment 1 will be described in detail below in combination with embodiment 2 in which the network device is the core network device and embodiment 3 in which the network device is the access network device.

### Embodiment 2: a terminal device sends first information to a first core network device

As illustrated in FIG. 3, in embodiment 2, operations at S210 in embodiment 1 may include or be replaced with operations at S310, that is, the terminal device sends the first information to the first core network device. Accordingly, the first core network device receives the first information sent by the terminal device. For the related illustration of the first information, reference can be made to embodiment 1 and embodiments 5 to 9 below.

In some implementations, after receiving the first information, the first core network device stores the first information in context information of the terminal device.

Since the first information is stored in a core network device, the terminal device does not need to report first model related information to the core network device or an access network device each time the terminal device enters a connected state, thereby reducing information reporting overheads of the terminal device.

In some implementations, the first core network device sends second information to a second core network device. Accordingly, the second core network device receives the second information sent by the first core network device. The second information includes a third identifier.

The third identifier is associated with model deployment information of the terminal device. In other words, the third identifier is used for determining a model deployment status of the terminal device.

In some implementations, the third identifier is associated with one or more of: a hardware configuration of the terminal device; a software configuration of the terminal device; and a set of models supported by the terminal device.

In some implementations, the third identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the third identifier is a subset of information contained in a first identifier. That is to say, the third identifier may contain part or all of the information in the first identifier.

When a core network device serving the terminal device changes (for example, due to the mobility of the terminal device), an old core network device may transfer the second information to a new core network device to prevent the terminal device from re-reporting the first information to the new core network device, thereby reducing information reporting overheads of the terminal device. For example, when the old core network device knows that the new core network device only supports part of a set of models, the third identifier may contain part of the information in the first identifier.

In some implementations, the first core network device sends third information to a first access network device. Accordingly, the first access network device receives the third information sent by the first core network device. The third information includes one or more of: a fourth identifier, a model identifier, and model description information.

In some implementations, the fourth identifier is associated with model deployment information of the terminal device. In other words, the fourth identifier indicates a model deployment status of the terminal device.

In some implementations, the fourth identifier is associated with one or more of: a hardware configuration of the terminal device; a software configuration of the terminal device; and a set of models supported by the terminal device.

In some implementations, the fourth identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the fourth identifier may be a subset of information contained in the first identifier. That is to say, the fourth identifier may contain part or all of the information in the first identifier. For example, when the first core network device knows that the first access network device only supports part of a set of models, the fourth identifier may contain part of the information in the first identifier.

In some implementations, the model identifier in the third information may be used for identifying one or more models in the model deployment information.

In some implementations, the model identifier in the third information may be used for identifying one or more models in the set of models supported by the terminal device.

In some implementations, the model description information in the third information may be used for describing the one or more models in the model deployment information or the one or more models in the set of models. For the detailed illustration of the model description information, reference can be made to embodiment 4 below, which will not be elaborated herein.

In some implementations, the first access network device locally maintains a mapping relationship among the fourth identifier, the model identifier, and the model description information. In this case, the third information needs to include only the fourth identifier.

In some implementations, the first access network device does not locally maintain a mapping relationship among the fourth identifier, the model identifier, and the model description information. In this case, the third information needs to include the fourth identifier, the model identifier, and the model description information, or needs to include only the model description information and the model identifier associated with the fourth identifier.

After the first access network device obtains the third information from the first core network device, it may be convenient for the first access network device to perform model control operations such as model activation, model deactivation, and model switching at a granularity of the terminal device.

In some implementations, after receiving the third information, the first access network device may send fourth information to a second access device. Accordingly, the second access network device receives the fourth information sent by the first access network device. The fourth information may include one or more of a fifth identifier, a model identifier, and model description information.

In some implementations, the fifth identifier is associated with model deployment information of the terminal device. In other words, the fifth identifier indicates a model deployment status of the terminal device.

In some implementations, the fifth identifier is associated with one or more of: a hardware configuration of the terminal device; a software configuration of the terminal device; and a set of models supported by the terminal device.

In some implementations, the fifth identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the fifth identifier may be a subset of the information contained in the fourth identifier. That is to say, the fifth identifier may contain part or all of the information in the fourth identifier. For example, when the first access network device knows that the second access network device only supports part of a set of models, the fifth identifier may contain part of the information in the fourth identifier.

In some implementations, the model identifier in the fourth information may be used for identifying one or more models in the model deployment information.

In some implementations, the model identifier in the fourth information may be used for identifying one or more models in the set of models supported by the terminal device.

In some implementations, the model description information in the fourth information may be used for describing the one or more models in the model deployment information or the one or more models in the set of models. For the detailed illustration of the model description information, reference can be made to embodiment 4 below, which will not be elaborated herein.

In some implementations, the second access network device locally maintains a mapping relationship among the fifth identifier, the model identifier, and the model description information. In this case, the fourth information needs to include only the fifth identifier.

In some implementations, the second access network device does not locally maintain a mapping relationship among the fifth identifier, the model identifier, and the model description information. In this case, the fourth information needs to include the fifth identifier, the model identifier, and the model description information, or needs to include only the model description information and the model identifier associated with the fifth identifier.

After a new access network device (corresponding to the above second access network device) obtains the fourth information from an old access network device (corresponding to the above first access network device), it may be convenient for the new access network device to perform model control operations such as model activation, model deactivation, and model switching at the granularity of the terminal device. As such, the terminal device can be prevented from re-reporting the first information after changing a serving cell due to the mobility, and the continuity of information exchange of model control information (such as AI control information) between access network devices can be ensured.

### Embodiment 3: a terminal device sends first information to a first access network device

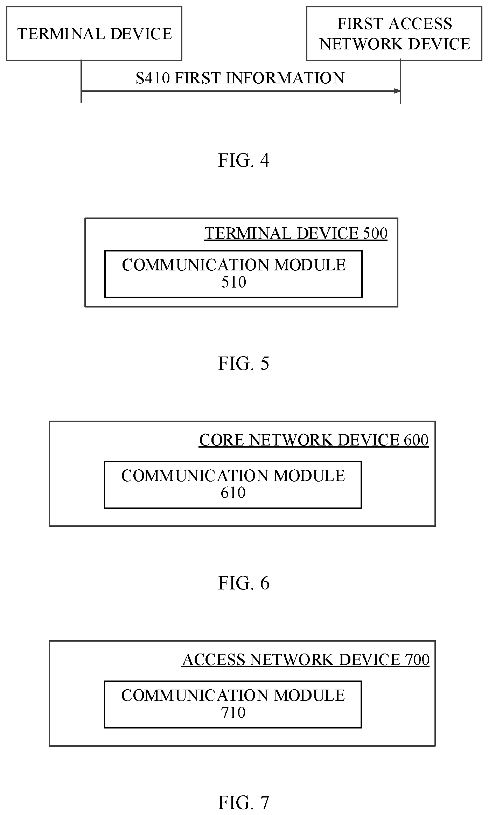

As illustrated in FIG. 4, in embodiment 3, operations at S210 in embodiment 1 may include or be replaced with operations at S410, that is, the terminal device sends the first information to the first access network device. Accordingly, the first access network device receives the first information sent by the terminal device. For the related illustration of the first information, reference can be made to embodiment 1 and embodiments 5 to 9 below.

Compared with embodiment 2, in embodiment 3, the first information is sent to an access network device, so that the transmission delay of the first information can be shortened. In addition, model deployment information related to the terminal device is directly sent to the access network device, so that information can also be used more timely.

In some implementations, the first access network device stores the first information in context information of the terminal device. In some implementations, after receiving the first information, the first access network device may send fifth information to a second access network device. Accordingly, the second access network device receives the fifth information sent by the first access network device. The fifth information includes one or more of: a sixth identifier, a model identifier, and model description information.

In some implementations, the sixth identifier is associated with model deployment information of the terminal device. In other words, the sixth identifier indicates a model deployment status of the terminal device.

In some implementations, the sixth identifier is associated with one or more of: a hardware configuration of the terminal device; a software configuration of the terminal device; and a set of models supported by the terminal device.

In some implementations, the sixth identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the sixth identifier may be a subset of information contained in a first identifier. That is to say, the sixth identifier may contain part or all of the information in the first identifier. For example, when the first access network device knows that the second access network device only supports part of a set of models, the sixth identifier may contain part of the information in the first identifier.

In some implementations, the model identifier in the fifth information may be used for identifying one or more models in the model deployment information.

In some implementations, the model identifier in the fifth information may be used for identifying one or more models in the set of models supported by the terminal device.

In some implementations, the model description information in the fifth information may be used for describing the one or more models in the model deployment information or the one or more models in the set of models. For the detailed illustration of the model description information, reference can be made to embodiment 4 below, which will not be elaborated herein.

In some implementations, the second access network device locally maintains a mapping relationship among the sixth identifier, the model identifier, and the model description information. In this case, the fifth information needs to include only the sixth identifier.

In some implementations, the second access network device does not locally maintain a mapping relationship among the sixth identifier, the model identifier, and the model description information. In this case, the fifth information needs to include the sixth identifier, the model identifier, and the model description information, or needs to include only the model description information and the model identifier associated with the sixth identifier.

After a new access network device (corresponding to the above second access network device) obtains the fifth information from an old access network device (corresponding to the above first access network device), it may be convenient for the new access network device to perform model control operations such as model activation, model deactivation, and model switching at a granularity of the terminal device. As such, the terminal device can be prevented from re-reporting the first information after changing a serving cell due to the mobility, and the continuity of information exchange of model control information (such as AI control information) between access network devices can be ensured.

In some implementations, after receiving the first information, the first access network device may send sixth information to a first core network device. Accordingly, the first core network device receives the sixth information sent by the first access network device. The sixth information includes one or more of: a seventh identifier, a model identifier, and model description information.

In some implementations, the seventh identifier is associated with model deployment information of the terminal device. In other words, the seventh identifier indicates a model deployment status of the terminal device.

In some implementations, the seventh identifier is associated with one or more of: a hardware configuration of the terminal device; a software configuration of the terminal device; and a set of models supported by the terminal device.

In some implementations, the seventh identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the seventh identifier may be a subset of information contained in the first identifier. That is to say, the seventh identifier may contain part or all of the information in the first identifier. For example, when the first access network device knows that the first core network device only supports part of a set of models, the seventh identifier may contain part of the information in the first identifier.

In some implementations, the model identifier in the sixth information may be used for identifying one or more models in the model deployment information.

In some implementations, the model identifier in the sixth information may be used for identifying one or more models in the set of models supported by the terminal device.

In some implementations, the model description information in the sixth information may be used for describing the one or more models in the model deployment information or the one or more models in the set of models. For the detailed illustration of the model description information, reference can be made to embodiment 4 below, which will not be elaborated herein.

In some implementations, the sixth information needs to include only the seventh identifier.

In some implementations, the sixth information needs to include the seventh identifier, the model identifier, and the model description information, or needs to include the model description information and the model identifier associated with the seventh identifier.

Through transmission of the sixth information, the terminal device does not need to re-report the first information each time the terminal device enters a connected state. This is because the terminal device sends the sixth information to a core network device for storage each time before leaving the connected state, and when the terminal device returns to the connected state subsequently, the core network device provides all or part of information in the stored sixth information again to a new access network device for use.

In some implementations, a third access network device (which may be the same as or different from the first access network device) receives seventh information sent by a first core network device. Accordingly, the first core network device sends the seventh information to the third access network device. The seventh information includes one or more of: an eighth identifier, a model identifier, and model description information.

In some implementations, the eighth identifier is associated with model deployment information of the terminal device. In other words, the eighth identifier indicates a model deployment status of the terminal device.

In some implementations, the eighth identifier is associated with one or more of: a hardware configuration of the terminal device; a software configuration of the terminal device; and a set of models supported by the terminal device.

In some implementations, the eighth identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the eighth identifier may be a subset of information contained in a seventh identifier. That is to say, the eighth identifier may contain part or all of the information in the seventh identifier. For example, when the first core network device knows that the third access network device only supports part of a set of models, the eighth identifier may contain part of the information in the seventh identifier.

In some implementations, the model identifier in the seventh information may be used for identifying one or more models in the model deployment information.

In some implementations, the model identifier in the seventh information may be used for identifying one or more models in the set of models supported by the terminal device.

In some implementations, the model description information in the seventh information may be used for describing the one or more models in the model deployment information or the one or more models in the set of models. For the detailed illustration of the model description information, reference can be made to embodiment 4 below, which will not be elaborated herein.

In some implementations, the seventh information needs to include only the eighth identifier.

In some implementations, the seventh information needs to include the eighth identifier, the model identifier, and the model description information, or needs to include the model description information and the model identifier associated with the eighth identifier.

In some implementations, the first core network device sends eighth information to a second core network device. Accordingly, the second core network device receives the eighth information sent by the first core network device. The eighth information includes one or more of: a ninth identifier, a model identifier, and model description information.

In some implementations, the ninth identifier is associated with model deployment information of the terminal device. In other words, the ninth identifier indicates a model deployment status of the terminal device.

In some implementations, the ninth identifier is associated with one or more of: a hardware configuration of the terminal device; a software configuration of the terminal device; and a set of models supported by the terminal device.

In some implementations, the ninth identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, information contained in the ninth identifier may be a subset of the information contained in the seventh identifier. That is to say, the ninth identifier may contain part or all of the information in the seventh identifier. For example, when the first core network device knows that the second core network device only supports part of a set of models, the ninth identifier may contain part of the information in the seventh identifier.

In some implementations, the model identifier in the eighth information may be used for identifying one or more models in the model deployment information.

In some implementations, the model identifier in the eighth information may be used for identifying one or more models in the set of models supported by the terminal device.

In some implementations, the model description information in the eighth information may be used for describing the one or more models in the model deployment information or the one or more models in the set of models. For the detailed illustration of the model description information, reference can be made to embodiment 4 below, which will not be elaborated herein.

In some implementations, the eighth information needs to include only the ninth identifier.

In some implementations, the eighth information needs to include the ninth identifier, the model identifier, and the model description information, or needs to include the model description information and the model identifier associated with the ninth identifier.

When a core network device serving the terminal device changes, the continuity of maintenance of the model deployment information between different core networks is kept in the above process, thereby preventing the terminal device from re-reporting the first information, and reducing reporting overheads of air interface information.

### Embodiment 4: model description information (applicable to any one of embodiments 1 to 3)

In some implementations, the model description information includes one or more of: information indicating a function of a model; information indicating a type of an input parameter of the model; information indicating a format of the input parameter of the model; information indicating a pre-processing rule of the input parameter of the model; information indicating a type of an output parameter of the model; information indicating a format requirement of the output parameter of the model; information indicating a pre-processing rule of the output parameter of the model; information indicating an application scenario of the model; information indicating a deployment location of the model; information indicating a capability requirement for application of the model; information indicating a performance monitoring indicator of the model; information indicating a home location of the model; information indicating an effective application range of the model; information indicating a generalization characteristic of the model; information indicating a version of the model; information indicating accuracy of the model; information indicating a compilation format of model data; information indicating a storage format of the model data; information indicating computational complexity of the model; information indicating model complexity of the model; and information indicating a size of the model.

The following will provide detailed illustrative examples of information that may be included in the model description information.

### Information 1: the information indicating the function of the model

Information 1 may indicate a function or functional characteristic associated with a corresponding model. For example, model 1 is used for a channel state information (CSI) compression feedback function, model 2 is used for a mobility enhancement function, model 3 is used for a beam prediction function, and model 4 is used for a positioning function, etc.

### Information 2: the information indicating the type of the input parameter of the model

Information 2 may indicate a type of an input parameter required for a corresponding model. For example, model 3 is used for a beam prediction function, and a type of input parameters required for model 3 includes index information of an actually measured beam, signal measurement result information of each beam obtained from actual measurement, or the like.

### Information 3: the information indicating the format of the input parameter of the model

Information 3 may indicate a format of an input parameter required for a corresponding model. For example, model 3 is used for a beam prediction function, and assuming that a network device may schedule resources in eight beam directions but only sends measurement reference signals in four of the beam directions, then a terminal device can only obtain measurement results of four beams in each measurement process.

In the first scenario, a beam prediction model only predicts signal measurement results for other beams that are not measured at a current moment. If only measurement results of four beams need to be input to the beam prediction model used in the first scenario, then the measurement results of four beams obtained by the terminal device from each measurement may be exactly used as the input to the beam prediction model in the first scenario (where the output may be measurement results of eight beams associated with the current measurement, i.e., four true values and four prediction values, or the output may be predicted measurement results of four beams).

In the second scenario, a beam prediction model is used for predicting measurement results of eight beams in a future period of time. The input to the beam prediction model in this scenario may be a set of measurement results of four beams obtained in the past *N* measurement processes, and the output of the beam prediction model may be a set of measurement results of eight beams in the future period of time. For example, the input to the beam prediction model is a set of three groups of measurement results of four beams obtained at moments T-3, T-2, and T-1, and the output of the beam prediction model is a set of two groups of measurement results of eight beams at moments T and T+1.

To sum up, when measurement results of four measured beams are used for beam prediction (with the same type of input parameters of the model), different formats of input data are required for different application scenarios. Therefore, format requirement information of input parameters associated with the model is also one of key information for describing the model.

### Information 4: the information indicating the pre-processing rule of the input parameter of the model

Information 4 may indicate how to re-process a set of input data of a corresponding model. An operation(s) involved in the re-processing process may include at least one of data dimensionality reduction, data dimensionality augmentation, redundancy elimination, or redistribution.

Data dimensionality reduction: if the dimension of data is higher than the dimension required for the input to the model, data dimensionality reduction needs to be performed on the data according to a pre-processing rule before the data is input to the model.

Data dimensionality augmentation: if the dimension of data is lower than the dimension required for the input to the model, data dimensionality augmentation needs to be performed on the data according to a pre-processing rule before the data is input to the model.

Redundancy elimination: if the distribution or information amount of multiple groups of data is almost the same, redundancy elimination needs to be performed on the data according to a pre-processing rule before the data is input to the model, because redundant data often does not bring more performance improvements and instead increases invalid operations.

Redistribution: in some cases, it is difficult to obtain good model generalization for a model obtained by putting data with similar feature information together for model training, and re-distributing data with different feature information is conducive to obtaining a model with better generalization.

For example, in the first scenario of information 3, the terminal device may measure four of eight beams in cell A, but may measure five of the eight beams in cell B, and may measure three of the eight beams in cell C. If it is expected to use the same beam prediction model (with only the measurement results of four beams required for the input) in cells A, B, and C for beam prediction, then measurement results in cell A may be directly used. However, measurement results obtained in cell B need to be subject to data dimensionality reduction, that is, four measurement results are selected from measurement results of five available beams as input parameters required for the model, while measurement results obtained in cell C need to be subject to data dimensionality augmentation, that is, measurement results of three available beams are converted into four measurement results to obtain input parameters required for the model.

In another implementation, at least two of information 2, information 3, or information 4 may be defined in combination. Embodiments of the disclosure are not limited in this regard.

### Information 5: the information indicating the type of the output parameter of the model

Information 5 may indicate a type of an output parameter required for a corresponding model. For example, model 3 is used for a beam prediction function, and a corresponding type of output parameters includes index information of an actually unmeasured beam, predicted signal measurement result information of each actually unmeasured beam, or the like.

### Information 6: the information indicating the format requirement of the output parameter of the model

Information 6 may indicate a format of an output parameter required for a corresponding model. For example, model 3 is used for a beam prediction function, and output parameters may be beam prediction results at one future moment or a set of beam prediction results at multiple future moments. For example, the input to the model is a set of three groups of measurement results of four beams obtained at moments T-3, T-2, and T-1, and the output of the model may be measurement results of eight beams at moment T or a set of two groups of measurement results of eight beams at moments T and T+1.

To sum up, during prediction of future beam measurement results (with the same type of output data of the model), different formats of output data are required for model 3 in different application scenarios. Therefore, format requirement information of output parameters associated with the model is also one of key information for describing the model.

### Information 7: the information indicating the pre-processing rule of the output parameter of the model

Information 7 may indicate how to re-process a set of output data of a corresponding model. An operation(s) involved in the re-processing process may include at least one of data dimensionality reduction, data dimensionality augmentation, redundancy elimination, or redistribution. For a specific processing manner, reference can be made to the related illustration in information 4.

In another implementation, at least two of information 5, information 6, or information 7 may be defined in combination. Embodiments of the disclosure are not limited in this regard.

### Information 8: the information indicating the application scenario of the model

Information 8 may refer to different application scenarios under the same functional characteristic. For example, for a model used for positioning, application scenarios may be further subdivided into a line of sight (LoS) scenario (or referred to as a direct path scenario), a non-line of sight (NLoS) scenario (or referred to as a non-direct path scenario), and a mixed scenario (including both LoS and NLoS). For another example, for a model used for mobility control, application scenarios may be further subdivided into a terrestrial communication scenario and a non-terrestrial communication scenario (including sub-scenarios such as satellite communication, drone communication, and hot-air-balloon communication). Each scenario may be further divided into sub-scenarios such as a high-speed mobility scenario, a medium-speed mobility scenario, and a low-speed mobility scenario, or may be divided into sub-scenarios such as a high-frequency mobility scenario and a low-frequency mobility scenario. Two of the scenarios may also be combined, for example, a high-frequency mobility scenario for terrestrial communication.

Optionally, information 8 may also have a value, and the meaning of the value indicates that the application scenario of the model is a full scenario (that is, the model is applicable to any scenario corresponding to a functional characteristic associated with the model). For example, for a model used for positioning, assuming that information 8 contains two bits, value '00' may indicate any scenario, value '01' may indicate an LoS scenario, value '10' may indicate an NLoS scenario, and value '11' may indicate a mixed scenario.

### Information 9: the information indicating the deployment location of the model

Information 9 may include any one of the following meanings: deployment on a core network device, deployment on an application server, deployment in operation administration and maintenance (OAM), deployment on an access network device, deployment on a terminal device, or no deployment location restriction.

### Information 10: the information indicating the capability requirement for application of the model

Information 10 may indicate several capability requirements required for application of the model. For example, the information of the capability requirement for application of the model includes one or more of: a minimum requirement for a floating-point number operation capability required for application of the model, a minimum requirement for running memory required for application of the model, a level of a memory size occupied by model algorithm data before compilation, a level of a memory size occupied by model algorithm data after compilation, a minimum input data rate (or bit rate) required for application of the model, a maximum input data rate (or bit rate) required for application of the model, a minimum output data rate (or bit rate) required for application of the model, and a maximum output data rate (or bit rate) required for application of the model.

### Information 11: the information indicating the performance monitoring indicator of the model

Information 11 may indicate several indicators for monitoring the model. For example, the information of the performance monitoring indicator associated with the model includes one or more of: average energy consumption of a single inference process, an average floating-point number computation amount of a single inference process, an average delay of a single inference process, a system throughput, a system bit error rate, an average transmission delay of a data packet, and inference accuracy of the model.

### Information 12: the information indicating the home location of the model

Information 12 may indicate information related to a provider of the model data. For example, information 12 may include information of a country or region to which the model data belongs and/or information of a service provider to which the model data belongs.

The service provider may be any one of: over the top (OTT, which provides application services to users via the internet) vendor information, network operator information (for example, represented by a public land mobile network (PLMN) identifier), and public website information.

### Information 13: the information indicating the effective application range of the model

For example, information 13 may include one or more of an applicable scenario, configuration, site information, and the like of the model. Information 13 may indicate a condition under which the model is effectively applied. For example, the information of the effective application range associated with the model includes one or more of: information of a geographic region allowed for effective application, information of a country allowed for effective application, information of a PLMN allowed for effective application, information of a tracking area code (TAC) allowed for effective application, information of an RAN area code (RANAC) allowed for effective application, information of a cell allowed for effective application, and information of a configuration allowed for effective application.

### Information 14: the information indicating the generalization characteristic of the model

A generalization characteristic reflects an extensive degree of an applicable scenario of a model. Generally, the higher the generalization characteristic of the model, the more application scenarios the model is applicable to. The information of the generalization characteristic of the model may include information of at least one application scenario of the model (see the definition in information 8), which indicates that the associated model may be used in the application scenarios included above.

### Information 15: the information indicating the version of the model

As different parameters in the same application scenario change over time, algorithm data of a model corresponding to a function may need to be fine-tuned or updated. Models before and after the update are associated with the same application scenario and also serve the same function, but the details of model algorithm data are slightly different. Therefore, the models may be distinguished by version numbers of model algorithms, which facilitates the control and management for similar model algorithms.

### Information 16: the information indicating the accuracy of the model (for example, indicating an accuracy level of the model)

Even for models corresponding to the same function and the same application scenario, the complexity of model algorithm design is different, and the inference accuracy of corresponding models is also different. To distinguish the differences in the inference accuracy of similar models, accuracy level information of a model algorithm may be used for describing the inference accuracy of a corresponding model.

### Information 17: the information indicating the compilation format of the model data

A model algorithm is essentially a program written in a computer language, and the file types of programs written in different language platforms are different. Some languages are compatible with each other, while others are not. Therefore, compilation format information of model algorithm data is also important information for describing a model, and this information may inform a model user of a compilation environment required for application of the model. Otherwise, the incorrect use of an incompatible language compilation environment will lead to the inability to use a corresponding model algorithm.

### Information 18: the information indicating the storage format of the model data

Information 18 may indicate a format in which the model data is stored, for example, the zip compression format.

### Information 19, the information indicating the computational complexity of the model

Information 19 may indicate a fundamental operation capability required for application of the model, for example, the number of floating-point numbers that need to be calculated per second.

### Information 20, the information indicating the model complexity of the model

Information 20 may indicate the complexity of the model, for example, the number of layers of neurons of the model.

### Information 21: the information indicating the size of the model

Information 21 may indicate a memory size occupied by model data before or after compilation.

### Embodiment 5: a version identifier associated with a hardware configuration of a terminal device (applicable to any one of embodiments 1 to 3)

A complete terminal device includes a software configuration (for example, software that is installed on the terminal device and matches the operation of a chip) and a hardware configuration (for example, a chip installed on the terminal device). The hardware configuration of the terminal device is basically not updated after delivery, while some software configurations may be irregularly updated as needed. A model deployed on the terminal device needs to rely on software and hardware resources of the terminal device to operate normally.

In some implementations, model deployment information of the terminal device may be associated with only a version of a hardware configuration supported by the terminal device. That is to say, once a version identifier associated with the hardware configuration supported by the terminal device is obtained, the model deployment information of the terminal device can be obtained. In this implementation, since the hardware configuration supported by the terminal device generally does not change, deployment information of models supported by the terminal device also generally does not change. A possible implementation is illustrated in table 1 below.

**Table 1: association relationship between model deployment information and version identifiers associated with hardware configurations**

| Association relationship between model deployment information and version identifiers associated with hardware configurations | |
|---|---|
| Version identifier 1 associated with a hardware configuration of the terminal device | Deployment information 1 of models supported by the terminal device |
| Version identifier 2 associated with a hardware configuration of the terminal device | Deployment information 2 of models supported by the terminal device |
| ...... | ...... |
| Version identifier *n*1 associated with a hardware configuration of the terminal device | Deployment information *n*1 of models supported by the terminal device |

In table 1, a parameter *n*1 is a positive integer greater than or equal to 1, and there is an association (i.e., a pre-defined association relationship) between each version identifier associated with the hardware configuration of the terminal device and one deployment information of models supported by the terminal device. Each deployment information of models supported by the terminal device indicates information of models that have been deployed on the terminal device under a corresponding hardware configuration condition. For example, models supported by the terminal device under a hardware condition of chip configuration X include model A and model B, models supported by the terminal device under a hardware condition of chip configuration Y include model A, model B, and model C, and models supported by the terminal device under a hardware condition of chip configuration Z include model A, model B, model C, and model D.

From the perspective of the terminal device, a specific mapping relationship (i.e., a mapping relationship illustrated in table 1) between the version identifiers associated with the hardware configurations and the model deployment information does not need to be directly reported, but only a version identifier associated with a hardware configuration currently supported by the terminal device needs to be reported, thereby reducing reporting overheads of model related information of the terminal device. A hardware developer (for example, a terminal vendor or a chip vendor) may align the mapping relationship in table 1 with a network device operator (a communication operator or a network device manufacturer) based on an inter-vendor protocol. Since the hardware configuration of the terminal device generally does not change after delivery, it means that information of models supported by the terminal device also does not change. Although some flexibility in model deployment is lost, operations of the terminal device become simple, as there is no need to consider additional operations brought to the terminal device by the update of the model deployment information. From the perspective of the network device operator, since the mapping relationship in table 1 may be obtained based on the inter-vendor protocol, little information needs to be received according to standards (i.e., only the version identifier associated with the hardware configuration sent by the terminal device needs to be received), and the network device can obtain the model deployment information of the terminal device based on the received version identifier associated with the hardware configuration, thereby simplifying the workload of standardization discussions. In addition, the mapping information in table 1 maintained based on the inter-vendor protocol is not frequently updated, which greatly reduces manpower and material costs caused by the maintenance and update of the inter-vendor protocol. This is because the version identifier associated with the hardware configuration of the terminal device is not frequently updated (generally updated in a unit of a quarter, for example, the iteration of mobile phone chips needs to take at least several months). Although the network device performs model management for the terminal device according to a granularity of the terminal device, the network device maintains the information in table 1 according to a granularity of a hardware configuration version. Since the same terminal device generally supports the same hardware configuration version, the amount of information corresponding to table 1 that needs to be maintained by the network device operator may not be very large, and one hardware configuration version needs to be updated only once.

### Embodiment 6: a version identifier associated with a software configuration of a terminal device (applicable to any one of embodiments 1 to 3)

Model deployment information of the terminal device (i.e., information of models actually available to the terminal device) may be associated with only a software configuration supported by the terminal device. That is, once a version identifier associated with the software configuration supported by the terminal device is obtained, model deployment information correspondingly supported by this software configuration version can be obtained. In this implementation, since the software configuration supported by the terminal device does not change frequently, deployment information of models supported by the terminal device also does not change frequently. An example of this implementation is illustrated in table 2.

**Table 2: association relationship between model deployment information and version identifiers associated with software configurations**

| Association relationship between model deployment information and version identifiers associated with software configurations | |
|---|---|
| Version identifier 1 associated with a software configuration supported by the terminal device | Deployment information 1 of models supported by the terminal device |
| Version identifier 2 associated with a software configuration supported by the terminal device | Deployment information 2 of models supported by the terminal device |
| ...... | ...... |
| Version identifier *n*2 associated with a | Deployment information *n*2 of models |
| software configuration supported by the terminal device | supported by the terminal device |

In table 2, a parameter *n*2 is a positive integer greater than or equal to 1, and there is an association (i.e., a pre-defined association relationship) between each version identifier associated with the software configuration supported by the terminal device and one deployment information of models supported by the terminal device. Each deployment information of models supported by the terminal device indicates information of models that have been deployed on the terminal device under a corresponding software configuration condition. For example, models supported by the terminal device under a condition of software configuration S1 include model A and model B, models supported by the terminal device under a condition of software configuration S2 include model A, model B, and model C, and models supported by the terminal device under a condition of software configuration S3 include model A, model B, model C, and model D.

From the perspective of the terminal device, a specific mapping relationship (i.e., a mapping relationship illustrated in table 2) between the version identifiers associated with the software configurations and the model deployment information does not need to be directly reported, but only a version identifier associated with a software configuration currently supported by the terminal device needs to be reported, thereby reducing reporting overheads of information related to the terminal device. This is because a software developer (for example, a terminal vendor) may align the mapping relationship in table 2 with a network device operator (a communication operator or a network device manufacturer) based on an inter-vendor protocol. In addition, since the software configuration of the terminal device may change, it means that information of models supported by the terminal device may also change. As such, the flexibility in model deployment of the terminal device is increased, that is, models deployed on the terminal device can be updated by updating a software configuration version. Furthermore, the terminal device only needs to send an identifier of an updated software configuration version to the network device, so as to enable the network device to obtain information of models newly deployed on the terminal device, and the additional standardization workload brought by the model update is very small. From the perspective of the network device operator, little information is received according to standards (i.e., only the identifier of the software configuration version sent by the terminal device is received). Since the mapping relationship in table 2 has been obtained based on the inter-vendor protocol, the network device can obtain the model deployment information of the terminal device based on the received version identifier associated with the software configuration, thereby simplifying the workload of standardization discussions. In addition, the mapping information in table 2 maintained based on the inter-vendor protocol may be further updated, which provides a way to update model information of the terminal device through software. In this way, performance upgrade of the terminal device can be realized without a need for a user to replace the terminal device, thereby improving the product experience of the user. Although the network device performs model management for the terminal device according to a granularity of the terminal device, the network device maintains the information in table 2 according to a granularity of the software configuration version. Since the same terminal device supports a limited number of software configuration versions, the amount of information corresponding to table 2 that needs to be maintained by the network device operator may not be very large, and one software configuration version needs to be updated only once.

### Embodiment 7: a second identifier (applicable to any one of embodiments 1 to 3)

The second identifier is associated with a combination of a hardware configuration of a terminal device and a software configuration of the terminal device. In other words, model deployment information of the terminal device (i.e., information of models actually available to the terminal device) may be associated with a combination of a hardware configuration and a software configuration supported by the terminal device. That is, once one of the hardware configuration and the software configuration changes, deployment information of models supported by the terminal device may differ. There are two branches of this implementation, with examples respectively illustrated in table 3 and table 4.

**Table 3: example 1 of an association between model deployment information and combinations of hardware configuration versions and software configuration versions**

| Association relationship between model deployment information and second identifiers | |
|---|---|
| Second identifier 1 supported by the terminal device | Deployment information 1 of models supported by the terminal device |
| Second identifier 2 supported by the terminal device | Deployment information 2 of models supported by the terminal device |
| ...... | ...... |
| Second identifier *n*3 supported by the terminal device | Deployment information *n*3 of models supported by the terminal device |

In table 3, a parameter *n*3 is a positive integer greater than or equal to 1, and a second identifier corresponds to a set of hardware configuration versions and software configuration versions supported by the terminal device. The second identifier may include one or more information fields (or referred to as multiple fields). In an implementation, the second identifier includes a first information field and a second information field, information in the first information field is associated with the hardware configuration of the terminal device, and information in the second information field is associated with the software configuration of the terminal device. For example, a second identifier occupies 32 bits and includes two information fields. The first information field occupies 16 bits and indicates hardware configuration versions supported by the terminal device, and the second information field occupies 16 bits and indicates software configuration versions supported by the terminal device. In another implementation, a second identifier may include only one information field. That is, the second identifier as a whole indicates both the hardware configuration versions and the software configuration versions supported by the terminal device. For example, models supported by the terminal device under a condition of chip configuration X and software configuration S1 include model A and model B, models supported by the terminal device under a condition of chip configuration X and software configuration S2 include model A, model B, and model C, models supported by the terminal device under a condition of chip configuration Y and software configuration S1 include model A, model B, model C, and model D, and models supported by the terminal device under a condition of chip configuration Z and software configuration S1 include model A, model C, and model D.

**Table 4: example 2 of an association between model deployment information and combinations of hardware configuration versions and software configuration versions**

| Association relationship between model deployment information and hardware configuration version identifiers as well as software configuration version identifiers | | |
|---|---|---|
| Version identifier 1 associated with a hardware configuration supported by the terminal device | Version identifier 1 associated with a software configuration supported by the terminal device | Deployment information 1 of models supported by the terminal device |
| | Version identifier 2 associated with a software configuration supported by the terminal device | Deployment information 2 of models supported by the terminal device |
| | ...... | ...... |
| | Version identifier *n*4 associated with a software configuration supported by the terminal device | Deployment information *n*4 of models supported by the terminal device |
| Version identifier 2 associated with a hardware configuration | Version identifier 1 associated with a software configuration supported by the terminal device | Deployment information 1 of models supported by the terminal device |
| supported by the terminal device | Version identifier 2 associated with a software configuration supported by the terminal device | Deployment information 2 of models supported by the terminal device |
| | ...... | ...... |
| | Version identifier *n*5 associated with a software configuration supported by the terminal device | Deployment information *n*5 of models supported by the terminal device |

In table 4, taking the number of hardware configuration versions being 2 as an example, parameters *n*4 and *n*5 each are a positive integer greater than or equal to 1. A version identifier associated with a hardware configuration corresponds to a set of hardware configuration versions supported by the terminal device, a version identifier associated with a software configuration corresponds to a set of software configuration versions supported by the terminal device, and deployment information of a set of models supported by the terminal device is associated with a combination of a version identifier associated with a hardware configuration and a version identifier associated with a software configuration. That is, deployment information of models supported by the terminal device can be uniquely determined only by determining both the hardware configuration and the software configuration supported by the terminal device. For example, models supported by the terminal device under a condition of chip configuration X and software configuration S1 include model A and model B, models supported by the terminal device under a condition of chip configuration X and software configuration S2 include model A, model B, and model C, models supported by the terminal device under a condition of chip configuration Y and software configuration S1 include model A, model B, model C, and model D, and models supported by the terminal device under a condition of chip configuration Z and software configuration S1 include model A, model C, and model D.

From the perspective of the terminal device, a mapping relationship illustrated in table 3 or table 4 does not need to be directly reported, but only a second identifier (or a version identifier associated with a hardware configuration and a version identifier associated with a software configuration) currently supported by the terminal device needs to be reported, thereby reducing reporting overheads of information related to the terminal device. This is because a software developer and a hardware developer may align the mapping relationship in table 3 or table 4 with a network device operator (a communication operator or a network device manufacturer) based on an inter-vendor protocol. In addition, supporting the update of the model deployment information through the software configuration while providing differentiated models for different hardware configurations takes the characteristics of the update of both the hardware configuration and the software configuration of the terminal device into consideration. Not only can differentiated products be provided for different user groups (from the perspective of hardware), but also software configuration update services can be provided for the same hardware device (from the perspective of software), thereby improving the experience of different user groups. From the perspective of the network device operator, little information is received according to standards. Since the mapping relationship in table 3 or table 4 has been obtained based on the inter-vendor protocol, the network device can obtain the model deployment information of the terminal device based on information of the second identifier (or the version identifier associated with the hardware configuration and the version identifier associated with the software configuration) received, thereby simplifying the workload of standardization discussions. In addition, the mapping information in table 3 or table 4 maintained based on the inter-vendor protocol is not frequently updated, which to some extent reduces manpower and material costs caused by the maintenance and update of the inter-vendor protocol. Furthermore, the mapping information in table 3 or table 4 maintained based on the inter-vendor protocol may be further updated, which provides a way to update model information of the terminal device through software. In this way, performance upgrade of the terminal device can be realized without a need for a user to replace the terminal device, thereby improving the product experience of the user and also demonstrating the differentiated service advantage of the network device operator. Although the network device performs model management for the terminal device according to a granularity of the terminal device, the network device maintains the information in table 3 or table 4 according to a granularity of the hardware configuration version and the software configuration version. Since the same terminal device generally supports the same hardware configuration version and supports a limited number of software configuration versions, the amount of information corresponding to table 3 or table 4 that needs to be maintained by the network device operator may not be very large, and one hardware configuration version and one software configuration version need to be updated only once.

### Embodiment 8: an identifier of a set of models supported by a terminal device

The identifier of the set of models supported by the terminal device is a logical identifier. An identifier of a set of models is associated with one or more models. The terminal device reports to a network device the identifier of the set of models supported by the terminal device. Since the network device locally maintains an association relationship (i.e., an association relationship illustrated in table 5 below) between identifiers of sets of models and models, the network device may determine, based on the identifier of the set of models, the set of models supported by the terminal device. An example of this implementation is illustrated in table 5.

**Table 5: association between model deployment information and identifiers of sets of models**

| Association relationship between model deployment information and identifiers of sets of models | |
|---|---|
| Identifier 1 of a set of models supported by the terminal device | Deployment information 1 of models supported by the terminal device |
| Identifier 2 of a set of models supported by the terminal device | Deployment information 2 of models supported by the terminal device |
| ...... | ...... |
| Identifier *n*6 of a set of models supported by the terminal device | Deployment information *n*6 of models supported by the terminal device |

In table 1, a parameter *n*6 is a positive integer greater than or equal to 1, and there is an association (i.e., a pre-defined association relationship) between each identifier of a set of models supported by the terminal device and one deployment information of models supported by the terminal device. Each deployment information of models supported by the terminal device indicates information of models that have been deployed on the terminal device under a condition of a corresponding identifier of a set of models. For example, identifier 1 of a set of models indicates that model A and model B have been deployed on the terminal device, identifier 2 of a set of models indicates that model A, model B, and model C have been deployed on the terminal device, and identifier 3 of a set of models indicates that model A, model B, model C, and model D have been deployed on the terminal device. Information in table 5 is notified to a network device operator in a form of an inter-vendor protocol.

In some implementations, the identifier associated with the set of models supported by the terminal device may be defined or transferred according to one or more of the following granularities: a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band (or referred to as a granularity of a bandwidth), a granularity of a band combination (or referred to as a granularity of a bandwidth combination), and a granularity of a channel model.

Defining or transferring the identifier of the set of models according to different granularities may bring the following beneficial effects. For one thing, the model update between different function modules (for example, a hardware function module, a software function module, and a protocol layer function module) of the terminal device is unbound, so that model deployment information can be precisely updated for a specific function module, thereby avoiding the passive update for other non-relevant function modules caused by the update of the model deployment information for a single function module. For another, since a model generally has an optimal operating scenario (for example, in a specific component carrier, a specific bandwidth, or a specific bandwidth combination), defining a set of models at a granularity of a scenario may also allow the model update between different scenarios to be unbound, so that deployment information of models supported in a specific scenario can be precisely updated, thereby avoiding the passive update in other non-relevant scenarios caused by the update of the model deployment information in a single scenario.

The meaning of the granularity of the version identifier associated with the hardware configuration (for the meaning, see the introduction in embodiment 5 above) indicates that one version identifier of the hardware configuration is associated with one or more identifiers of sets of models. The actual meaning indicates that the terminal device may support one or more sets of models under the hardware configuration, and each set of models includes one or more models.

The meaning of the granularity of the version identifier associated with the software configuration (for the meaning, see the introduction in embodiment 6 above) indicates that one version identifier of the software configuration is associated with one or more identifiers of sets of models. The actual meaning indicates that the terminal device may support one or more sets of models under the software configuration, and each set of model includes one or more models.

The meaning of the granularity of the second identifier (for the meaning, see the introduction in embodiment 7 above) indicates that one second identifier is associated with one or more identifiers of sets of models. The actual meaning indicates that the terminal device may support one or more sets of models under a hardware configuration and a software configuration, and each set of models includes one or more models.

The meaning of the granularity of the terminal device indicates that one terminal device is associated with one or more identifiers of sets of models. The actual meaning indicates that the terminal device supports one or more sets of models, and each set of model includes one or more models.

For the meaning of the granularity of the protocol layer, the protocol layer may be divided according to any one of the following manners: an application layer, a non-access stratum (NAS), and an access stratum (AS); the NAS and a non-NAS; the AS and a non-AS; the application layer and a non-application layer; and the application layer, the NAS, a service data adaptation protocol (SDAP) layer, a radio resource control (RRC) layer, a packet data convergence protocol (PDCP) layer, a backhaul adaptation protocol (BAP) layer, a radio link control (RLC) layer, a media access control (MAC) layer, and a physical (PHY) layer.

For example, in the case where the protocol layer is divided according to the application layer, the NAS, and the AS, the meaning of the granularity of the protocol layer indicates that each of the application layer, the NAS, and the AS is associated with one or more identifiers of sets of models (different protocol layers are associated with different sets of models respectively). The actual meaning indicates that each of an application layer, an NAS, and an AS of the terminal device supports one or more sets of models, and each set of models includes one or more models. The meanings of the granularity of the protocol layer in other division manners of the protocol layer are similar and will not be repeated herein.

The meaning of the granularity of the component carrier indicates that one component carrier or a group of component carriers is associated with one or more identifiers of sets of models. The actual meaning indicates that the terminal device supports one or more sets of models under a condition of one component carrier or a group of component carriers, and each set of models includes one or more models.

The meaning of the granularity of the band indicates that one band or a group of bands is associated with one or more identifiers of sets of models. The actual meaning indicates that the terminal device supports one or more sets of models under a condition of one band or a group of bands, and each set of models includes one or more models.

The meaning of the granularity of the band combination indicates that one band combination or a group of band combinations is associated with one or more identifiers of sets of models. The actual meaning indicates that the terminal device supports one or more sets of models under a condition of one band combination or a group of band combinations, and each set of models includes one or more models.

The meaning of the granularity of the channel model indicates that a channel model is associated with one or more identifiers of sets of models. The actual meaning indicates that the terminal device supports one or more sets of models under a channel model, and each set of models includes one or more models.

In some implementations, the channel model mentioned above may be classified according to a base station deployment scenario, or may be classified according to a signal direct path or a signal non-direct path.

In some implementations, the base station deployment scenario mentioned above may indicate one or more of the following scenarios: indoor hotspot (InH); indoor factory (InF); urban macro (UMa); urban micro (UMi); and rural macro (RMa).

In some implementations, the above different granularities may be used individually (see the introduction above) or may be used in combination. For example, in the case where the identifier of the set of models is defined or transmitted according to the granularity of the second identifier, the granularity of the band, and the granularity of the band combination, it indicates that one second identifier, one band, and one band combination are associated with one or more identifiers of sets of models. The actual meaning indicates that the terminal device supports one or more sets of models under a condition of a software and hardware configuration, a bandwidth, and a bandwidth combination, and each set of models includes one or more models.

For another example, the identifier of the set of models is defined or transmitted according to the granularity of the component carrier and the granularity of the band.

For another example, the identifier of the set of models is defined or transmitted according to the granularity of the component carrier, the granularity of the band, and the granularity of the band combination.

For another example, the identifier of the set of models is defined or transmitted according to the granularity of the second identifier and the granularity of the channel model.

For another example, the identifier of the set of models is defined or transmitted according to the granularity of the second identifier, the granularity of the component carrier, the granularity of the band, and the granularity of the band combination.

For another example, the identifier of the set of models is defined or transmitted according to the granularity of the second identifier, the granularity of the component carrier, the granularity of the band, the granularity of the band combination, and the granularity of the channel model.

### Embodiment 9: combination of information included in first information (applicable to embodiments 1 to 3)

As mentioned above, the first information may include one or more of: the version identifier associated with the hardware configuration of the terminal device; the version identifier associated with the software configuration of the terminal device; the second identifier (associated with the combination of the hardware configuration of the terminal device and the software configuration of the terminal device); and the identifier associated with the set of models supported by the terminal device. In some implementations, the first information may include only one of the above identifiers, or may include multiple of the above identifiers.

For example, the first information may include only the version identifier associated with the hardware configuration (for the meaning, see the introduction in embodiment 5 above).

For another example, the first information may include only the version identifier associated with the software configuration (for the meaning, see the introduction in embodiment 6 above).

For another example, the first information may include only the second identifier (for the meaning, see the introduction in embodiment 7 above), or may include the version identifier of the hardware configuration and the version identifier of the software configuration.

For another example, the first information may include only the identifier of the set of models (for the meaning, see the introduction in embodiment 8 above).

For another example, the first information includes the version identifier associated with the hardware configuration and the identifier of the set of models.

For another example, the first information includes the version identifier associated with the software configuration and the identifier of the set of models.

For another example, the first information includes the second identifier and the identifier of the set of models, or includes the version identifier associated with the hardware configuration, the version identifier associated with the software configuration, and the identifier of the set of models.

Optionally, if the first information includes only the identifier of the set of models, the identifier of the set of models may be defined or transferred according to one or more of the following granularities: a granularity of the terminal device, a granularity of a protocol layer, a granularity of a component carrier, a granularity of a band, a granularity of a band combination, and a granularity of a channel model.

Optionally, if the first information includes the version identifier associated with the hardware configuration and the identifier of the set of models, the above identifier of the set of models may be defined or transferred according to one or more of the following granularities: a granularity of the version identifier of the hardware configuration, a granularity of the terminal device, a granularity of a protocol layer, a granularity of a component carrier, a granularity of a band, a granularity of a band combination, and a granularity of a channel model.

Optionally, if the first information includes the version identifier associated with the software configuration and the identifier of the set of models, the above identifier of the set of models may be defined or transferred according to one or more of the following granularities: a granularity of the version identifier of the software configuration, a granularity of the terminal device, a granularity of a protocol layer, a granularity of a component carrier, a granularity of a band, a granularity of a band combination, and a granularity of a channel model.

Optionally, if the first information includes the second identifier and the identifier of the set of models, or includes the version identifier associated with hardware configuration, the version identifier associated with the software configuration, and the identifier of the set of models, the above identifier of the set of models may be defined or transferred according to one or more of the following granularities: a granularity of the version identifier of the hardware configuration, a granularity of the version identifier of the software configuration, a granularity of the first identifier, a granularity of the terminal device, a granularity of a protocol layer, a granularity of a component carrier, a granularity of a band, a granularity of a band combination, and a granularity of a channel model.

### Embodiment 10: a method for transmitting and/or carrying any information in embodiments 1 to 3

Optionally, any information involved in embodiments of the disclosure is carried in any one of the following message types: an NR positioning protocol A (NRPPa ) message, a long term evolution positioning protocol (LPP) message, an NAS message, an RRC message, a media access control control-element (MAC CE) message, a downlink control information (DCI) message, an uplink control information (UCI) message, a physical uplink control channel (PUCCH) message, a physical uplink shared channel (PUSCH) message, an inter-node message, an Xn interface message, an F1 interface message, an E1 interface message, an NG interface message, a core network service-based architecture message, and an AI dedicated message.

Optionally, any information involved in embodiments 1 to 3 is carried in any one of the following message types: a unicast message, a multicast message, and a broadcast message.

Unicast message (one-to-one): a source transfers the unicast message on a unicast channel, and only a terminal device or network device for which a corresponding unicast resource is allocated can attempt to receive the unicast message. The unicast message may be also referred to as dedicated signaling.

Multicast message (one-to-many): a source transfers the multicast message on a multicast channel, and a terminal device or network device which is in a coverage area of a multicast signal and is a member of a group can attempt to receive the multicast message. When a terminal device or network device joins the group, the terminal device or network device can obtain a resource related to the multicast channel.

Broadcast message (one-to-any): a source transfers the broadcast message on a broadcast channel, and any terminal device or network device in a coverage area of a broadcast signal can attempt to receive the broadcast message.

The method embodiments of the disclosure are described in detail above with reference to FIG. 1 to FIG. 4, and the apparatus embodiments of the disclosure will be described in detail below with reference to FIG. 5 to FIG. 10. It may be understood that, illustrations of the method embodiments and illustrations of the apparatus embodiments correspond to each other, and therefore, for parts not described in detail, reference can be made to the above method embodiments.

FIG. 5 is a schematic structural diagram of a terminal device provided in embodiments of the disclosure. The terminal device 500 illustrated in FIG. 5 may include a communication module 510. The communication module 510 is configured to send first information to a network device. The first information includes a first identifier, and the first identifier is associated with model deployment information of the terminal device.

In some implementations, the first identifier is associated with one or more of: a hardware configuration of the terminal device; a software configuration of the terminal device; and a set of models supported by the terminal device.

In some implementations, the first identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, the second identifier includes one or more information fields. When the second identifier includes multiple information fields, the second identifier includes a first information field and a second information field, information in the first information field is associated with the hardware configuration of the terminal device, and information in the second information field is associated with the software configuration of the terminal device.

In some implementations, the identifier associated with the set of models supported by the terminal device is defined or transferred according to one or more of the following granularities: a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

In some implementations, the network device is an access network device or a core network device.

FIG. 6 is a schematic structural diagram of a core network device provided in an embodiment of the disclosure. The core network device 600 illustrated in FIG. 6 may be a first core network device. The core network device 600 includes a communication module 610. The communication module 610 is configured to receive first information sent by a terminal device. The first information includes a first identifier, and the first identifier is associated with model deployment information of the terminal device.

In some implementations, the first identifier is associated with one or more of: a hardware configuration of the terminal device; a software configuration of the terminal device; and a set of models supported by the terminal device.

In some implementations, the first identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, the second identifier includes one or more information fields. When the second identifier includes multiple information fields, the second identifier includes a first information field and a second information field, information in the first information field is associated with the hardware configuration of the terminal device, and information in the second information field is associated with the software configuration of the terminal device.

In some implementations, the identifier associated with the set of models supported by the terminal device is defined or transferred according to one or more of the following granularities: a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

In some implementations, the communication module 610 is further configured to: store the first information in context information of the terminal device.

In some implementations, the communication module 610 is further configured to: send second information to a second core network device. The second information includes a third identifier, and information contained in the third identifier is a subset of information contained in the first identifier.

In some implementations, the core network device 600 is further configured to: send third information to a first access network device. The third information includes one or more of: a fourth identifier, where information contained in the fourth identifier is a subset of information contained in the first identifier; a model identifier for identifying one or more models in the model deployment information or one or more models in a set of models; and model description information for describing the one or more models in the model deployment information or the one or more models in the set of models.

In some implementations, the model description information includes one or more of: information indicating a function of a model; information indicating a type of an input parameter of the model; information indicating a format of the input parameter of the model; information indicating a pre-processing rule of the input parameter of the model; information indicating a type of an output parameter of the model; information indicating a format requirement of the output parameter of the model; information indicating a pre-processing rule of the output parameter of the model; information indicating an application scenario of the model; information indicating a deployment location of the model; information indicating a capability requirement for application of the model; information indicating a performance monitoring indicator of the model; information indicating a home location of the model; information indicating an effective application range of the model; information indicating a generalization characteristic of the model; information indicating a version of the model; information indicating accuracy of the model; information indicating a compilation format of model data; information indicating a storage format of the model data; information indicating computational complexity of the model; information indicating model complexity of the model; and information indicating a size of the model.

FIG. 7 is a schematic structural diagram of an access network device provided in an embodiment of the disclosure. The access network device 700 illustrated in FIG. 7 may be a first access network device. The access network device 700 includes a communication module 710. The communication module 710 is configured to receive third information sent by a first core network device. The third information includes a fourth identifier, information contained in the fourth identifier is a subset of information contained in a first identifier, and the first identifier is associated with model deployment information of a terminal device.

In some implementations, the first identifier is associated with one or more of: a hardware configuration of the terminal device; a software configuration of the terminal device; and a set of models supported by the terminal device.

In some implementations, the first identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, the second identifier includes one or more information fields. When the second identifier includes multiple information fields, the second identifier includes a first information field and a second information field, information in the first information field is associated with the hardware configuration of the terminal device, and information in the second information field is associated with the software configuration of the terminal device.

In some implementations, the identifier associated with the set of models supported by the terminal device is defined or transferred according to one or more of the following granularities: a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

In some implementations, the third information further includes one or more of: a model identifier for identifying one or more models in the model deployment information or one or more models in a set of models; and model description information for describing the one or more models in the model deployment information or the one or more models in the set of models.

In some implementations, the communication module 710 is further configured to: send fourth information to a second access device. The fourth information includes one or more of: a fifth identifier, where information contained in the fifth identifier is a subset of the information contained in the fourth identifier; a model identifier for identifying one or more models in the model deployment information or one or more models in a set of models; and model description information for describing the one or more models in the model deployment information or the one or more models in the set of models.

In some implementations, the model description information includes one or more of: information indicating a function of a model; information indicating a type of an input parameter of the model; information indicating a format of the input parameter of the model; information indicating a pre-processing rule of the input parameter of the model; information indicating a type of an output parameter of the model; information indicating a format requirement of the output parameter of the model; information indicating a pre-processing rule of the output parameter of the model; information indicating an application scenario of the model; information indicating a deployment location of the model; information indicating a capability requirement for application of the model; information indicating a performance monitoring indicator of the model; information indicating a home location of the model; information indicating an effective application range of the model; information indicating a generalization characteristic of the model; information indicating a version of the model; information indicating accuracy of the model; information indicating a compilation format of model data; information indicating a storage format of the model data; information indicating computational complexity of the model; information indicating model complexity of the model; and information indicating a size of the model.

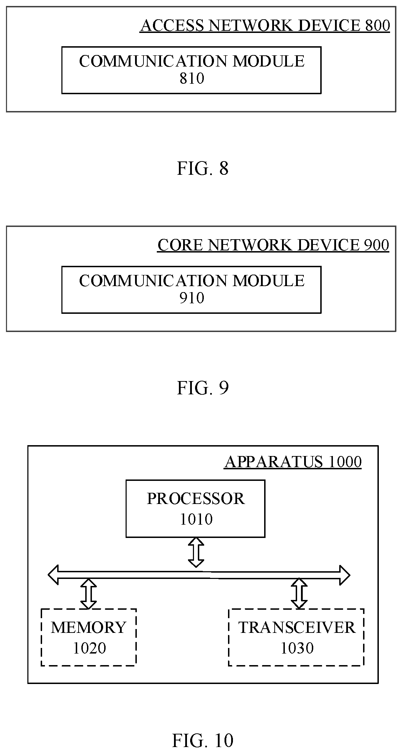

FIG. 8 is a schematic structural diagram of an access network device provided in an embodiment of the disclosure. The access network device 800 illustrated in FIG. 8 may be a first access network device. The access network device 800 includes a communication module 810. The communication module 810 is configured to receive first information sent by a terminal device. The first information includes a first identifier, and the first identifier is associated with model deployment information of the terminal device.

In some implementations, the first identifier is associated with one or more of: a hardware configuration of the terminal device; a software configuration of the terminal device; and a set of models supported by the terminal device.

In some implementations, the first identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, the second identifier includes one or more information fields. When the second identifier includes multiple information fields, the second identifier includes a first information field and a second information field, information in the first information field is associated with the hardware configuration of the terminal device, and information in the second information field is associated with the software configuration of the terminal device.

In some implementations, the identifier associated with the set of models supported by the terminal device is defined or transferred according to one or more of the following granularities: a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

In some implementations, the communication module 810 is further configured to: send fifth information to a second access network device. The fifth information includes one or more of: a sixth identifier, where information contained in the sixth identifier is a subset of information contained in the first identifier; a model identifier for identifying one or more models in the model deployment information or one or more models in a set of models; and model description information for describing the one or more models in the model deployment information or the one or more models in the set of models.

In some implementations, the communication module 810 is further configured to: send sixth information to a first core network device. The sixth information includes one or more of: a seventh identifier, where information contained in the seventh identifier is a subset of information contained in the first identifier; a model identifier for identifying one or more models in the model deployment information or one or more models in a set of models; and model description information for describing the one or more models in the model deployment information or the one or more models in the set of models.

In some implementations, the communication module 810 is further configured to: receive seventh information sent by a first core network device. The seventh information includes one or more of: an eighth identifier, where information contained in the eighth identifier is a subset of information contained in a seventh identifier; a model identifier for identifying one or more models in the model deployment information or one or more models in a set of models; and model description information for describing the one or more models in the model deployment information or the one or more models in the set of models.

In some implementations, the model description information includes one or more of: information indicating a function of a model; information indicating a type of an input parameter of the model; information indicating a format of the input parameter of the model; information indicating a pre-processing rule of the input parameter of the model; information indicating a type of an output parameter of the model; information indicating a format requirement of the output parameter of the model; information indicating a pre-processing rule of the output parameter of the model; information indicating an application scenario of the model; information indicating a deployment location of the model; information indicating a capability requirement for application of the model; information indicating a performance monitoring indicator of the model; information indicating a home location of the model; information indicating an effective application range of the model; information indicating a generalization characteristic of the model; information indicating a version of the model; information indicating accuracy of the model; information indicating a compilation format of model data; information indicating a storage format of the model data; information indicating computational complexity of the model; information indicating model complexity of the model; and information indicating a size of the model.

FIG. 9 is a schematic structural diagram of a core network device provided in another embodiment of the disclosure. The core network device 900 illustrated in FIG. 9 may be a first core network device. The core network device 900 includes a communication module 910. The communication module 910 is configured to receive sixth information sent by a first access network device. The sixth information includes a seventh identifier, information contained in the seventh identifier is a subset of information contained in a first identifier, and the first identifier is associated with model deployment information of a terminal device.

In some implementations, the first identifier is associated with one or more of: a hardware configuration of the terminal device; a software configuration of the terminal device; and a set of models supported by the terminal device.

In some implementations, the first identifier includes one or more of: a version identifier associated with a hardware configuration of the terminal device; a version identifier associated a software configuration of the terminal device; a second identifier, where the second identifier is associated with a combination of the hardware configuration of the terminal device and the software configuration of the terminal device; and an identifier associated with a set of models supported by the terminal device.

In some implementations, the second identifier includes one or more information fields. When the second identifier includes multiple information fields, the second identifier includes a first information field and a second information field, information in the first information field is associated with the hardware configuration of the terminal device, and information in the second information field is associated with the software configuration of the terminal device.

In some implementations, the identifier associated with the set of models supported by the terminal device is defined or transferred according to one or more of the following granularities: a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

In some implementations, the sixth information further includes one or more of: a model identifier for identifying one or more models in the model deployment information or one or more models in a set of models; and model description information for describing the one or more models in the model deployment information or the one or more models in the set of models.

In some implementations, the communication module 910 is further configured to: send seventh information to a third access network device. The seventh information includes one or more of: an eighth identifier, where information contained in the eighth identifier is a subset of the information contained in the seventh identifier; a model identifier for identifying one or more models in the model deployment information or one or more models in a set of models; and model description information for describing the one or more models in the model deployment information or the one or more models in the set of models. The third access network device is the same as or different from the first access network device.

In some implementations, the communication module 910 is further configured to: send eighth information to a second core network device. The eighth information includes one or more of: a ninth identifier, where information contained in the ninth identifier is a subset of the information contained in the seventh identifier; a model identifier for identifying one or more models in the model deployment information or one or more models in a set of models; and model description information for describing the one or more models in the model deployment information or the one or more models in the set of models.

In some implementations, the model description information includes one or more of: information indicating a function of a model; information indicating a type of an input parameter of the model; information indicating a format of the input parameter of the model; information indicating a pre-processing rule of the input parameter of the model; information indicating a type of an output parameter of the model; information indicating a format requirement of the output parameter of the model; information indicating a pre-processing rule of the output parameter of the model; information indicating an application scenario of the model; information indicating a deployment location of the model; information indicating a capability requirement for application of the model; information indicating a performance monitoring indicator of the model; information indicating a home location of the model; information indicating an effective application range of the model; information indicating a generalization characteristic of the model; information indicating a version of the model; information indicating accuracy of the model; information indicating a compilation format of model data; information indicating a storage format of the model data; information indicating computational complexity of the model; information indicating model complexity of the model; and information indicating a size of the model.

FIG. 10 is a schematic structural diagram of an apparatus provided in embodiments of the disclosure. A dashed line in FIG. 10 indicates that the unit or module is optional. The apparatus 1000 may be configured to implement the method described in the above method embodiments. The apparatus 1000 may be a chip, a terminal device, or a network device.

The apparatus 1000 may include one or more processors 1010. The processor 1010 may support the apparatus 1000 to implement the method described in the above method embodiments. The processor 1010 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field programmable gate array (FPGA), or another programmable logic device, discrete gate or transistor logic device, or discrete hardware component. The general-purpose processor may be a microprocessor, or the processor may be any conventional processor.

The apparatus 1000 may further include one or more memories 1020. The memory 1020 is configured to store a program. The program may be executed by the processor 1010, so that the processor 1010 performs the method described in the above method embodiments. The memory 1020 may be independent from the processor 1010, or may be integrated into the processor 1010.

The apparatus 1000 may further include a transceiver 1030. The processor 1010 may communicate with other devices or chips via the transceiver 1030. For example, the processor 1010 may perform data transmission and reception with other devices or chips via the transceiver 1030.

A computer-readable storage medium is further provided in embodiments of the disclosure. The computer-readable storage medium is configured to store a program. The computer-readable storage medium may be applied to the communication device provided in embodiments of the disclosure, and the program causes a computer to perform the method performed by the terminal device, the access network device, or the core network device in various embodiments of the disclosure.

A computer program product is further provided in embodiments of the disclosure. The computer program product includes a program. The computer program product may be applied to the communication device provided in embodiments of the disclosure, and the program causes a computer to perform the method implemented by the terminal device, the access network device, or the core network device in various embodiments of the disclosure.

A computer program is further provided in embodiments of the disclosure. The computer program may be applied to the communication device provided in embodiments of the disclosure, and the computer program causes a computer to perform the method performed by the terminal device, the access network device, or the core network device in various embodiments of the disclosure.

It may be understood that, the terms "system" and "network" herein are usually used interchangeably throughout this disclosure. In addition, the terms used in the disclosure are only intended for explaining embodiments of the disclosure, rather than limiting the disclosure. The terms "first", "second", "third", and "fourth", etc. in the specification and claims of the disclosure and the accompanying drawings are used for distinguishing different objects, and are not necessarily used for describing a particular order. Furthermore, the terms "include", "comprise", and "have" as well as variations thereof are intended to cover non-exclusive inclusion.

"Indication" referred to in embodiments of the disclosure may be a direct indication, may be an indirect indication, or may mean that there is an association relationship. For example, A indicating B may mean that A directly indicates B, for instance, B can be obtained according to A; may mean that A indirectly indicates B, for instance, A indicates C, and B can be obtained according to C; or may mean that that there is an association relationship between A and B.

In embodiments of the disclosure, "B corresponding to A" means that B is associated with A, and B can be determined according to A. However, it may also be understood that, "B can be determined according to A" does not mean that B can be determined only according to A, and instead, B can be determined according to A and/or other information.

In embodiments of the disclosure, the term "correspondence" may mean that there is a direct or indirect correspondence between the two, may mean that there is an association relationship between the two, or may mean a relationship of indicating and being indicated or configuring and being configured, etc.

In embodiments of the disclosure, the "pre-defined" or "pre-configured" can be implemented by pre-storing a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

In embodiments of the disclosure, the term "and/or" only describes an association relationship between associated objects, which means that there can be three relationships. For example, A and/or B can mean A alone, both A and B exist, and B alone. In addition, the character "/" herein generally indicates that the associated objects are in an "or" relationship.

In various embodiments of the disclosure, the magnitude of a sequence number of each process does not mean an order of execution, and the order of execution of each process may be determined by its function and an internal logic and shall not constitute any limitation to the implementation of embodiments of the disclosure.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other aspects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various function units described in various embodiments of the disclosure may be integrated into one processing unit or may be present as a number of physically separated units, and two or more units may be integrated into one.

All or some of the above embodiments can be implemented by software, hardware, firmware, or any combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer may be a general-purpose computer, a special-purpose computer, a computer network, or another programmable apparatus. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium may be any computer accessible usablemedium or a data storage device such as a server, a data center, or the like which integrates one or more usable media. The usable medium may be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
sending, by a terminal device, first information to a network device, wherein the first information comprises a first identifier, and the first identifier is associated with model deployment information of the terminal device.

2. The method of claim 1, wherein the first identifier is associated with one or more of:
a hardware configuration of the terminal device;
a software configuration of the terminal device; and
a set of models supported by the terminal device.

3. The method of claim 1 or 2, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

4. The method of claim 3, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

5. The method of claim 3 or 4, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

6. The method of any one of claims 1 to 5, wherein the network device is an access network device or a core network device.

7. A wireless communication method, comprising:
receiving, by a first core network device, first information sent by a terminal device, wherein the first information comprises a first identifier, and the first identifier is associated with model deployment information of the terminal device.

8. The method of claim 7, wherein the first identifier is associated with one or more of:
a hardware configuration of the terminal device;
a software configuration of the terminal device; and
a set of models supported by the terminal device.

9. The method of claim 7 or 8, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

10. The method of claim 9, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

11. The method of claim 9 or 10, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

12. The method of any one of claims 7 to 11, further comprising:
storing, by the first core network device, the first information in context information of the terminal device.

13. The method of any one of claims 7 to 12, further comprising:
sending, by the first core network device, second information to a second core network device, wherein the second information comprises a third identifier, and information contained in the third identifier is a subset of information contained in the first identifier.

14. The method of any one of claims 7 to 13, further comprising:
sending, by the first core network device, third information to a first access network device, wherein the third information comprises one or more of:
a fourth identifier, wherein information contained in the fourth identifier is a subset of information contained in the first identifier;
a model identifier for identifying one or more models in the model deployment information or one or more models in a set of models; and
model description information for describing the one or more models in the model deployment information or the one or more models in the set of models.

15. The method of claim 14, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

16. A wireless communication method, comprising:
receiving, by a first access network device, third information sent by a first core network device, wherein the third information comprises a fourth identifier, information contained in the fourth identifier is a subset of information contained in a first identifier, and the first identifier is associated with model deployment information of a terminal device.

17. The method of claim 16, wherein the first identifier is associated with one or more of:
a hardware configuration of the terminal device;
a software configuration of the terminal device; and
a set of models supported by the terminal device.

18. The method of claim 16 or 17, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

19. The method of claim 18, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

20. The method of claim 18 or 19, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

21. The method of any one of claims 16 to 20, wherein the third information further comprises one or more of:
a model identifier for identifying one or more models in the model deployment information or one or more models in a set of models; and
model description information for describing the one or more models in the model deployment information or the one or more models in the set of models.

22. The method of any one of claims 16 to 21, further comprising:
sending, by the first access network device, fourth information to a second access device, wherein the fourth information comprises one or more of:
a fifth identifier, wherein information contained in the fifth identifier is a subset of the information contained in the fourth identifier;
a model identifier for identifying one or more models in the model deployment information or one or more models in a set of models; and
model description information for describing the one or more models in the model deployment information or the one or more models in the set of models.

23. The method of claim 21 or 22, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

24. A wireless communication method, comprising:
receiving, by a first access network device, first information sent by a terminal device, wherein the first information comprises a first identifier, and the first identifier is associated with model deployment information of the terminal device.

25. The method of claim 24, wherein the first identifier is associated with one or more of:
a hardware configuration of the terminal device;
a software configuration of the terminal device; and
a set of models supported by the terminal device.

26. The method of claim 24 or 25, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

27. The method of claim 26, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

28. The method of claim 26 or 27, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

29. The method of any one of claims 24 to 28, further comprising:
sending, by the first access network device, fifth information to a second access network device, wherein the fifth information comprises one or more of:
a sixth identifier, wherein information contained in the sixth identifier is a subset of information contained in the first identifier;
a model identifier for identifying one or more models in the model deployment information or one or more models in a set of models; and
model description information for describing the one or more models in the model deployment information or the one or more models in the set of models.

30. The method of any one of claims 24 to 29, further comprising:
sending, by the first access network device, sixth information to a first core network device, wherein the sixth information comprises one or more of:
a seventh identifier, wherein information contained in the seventh identifier is a subset of information contained in the first identifier;
a model identifier for identifying one or more models in the model deployment information or one or more models in a set of models; and
model description information for describing the one or more models in the model deployment information or the one or more models in the set of models.

31. The method of any one of claims 24 to 30, further comprising:
receiving, by a third access network device, seventh information sent by a first core network device, wherein the seventh information comprises one or more of:
an eighth identifier, wherein information contained in the eighth identifier is a subset of information contained in a seventh identifier;
a model identifier for identifying one or more models in the model deployment information or one or more models in a set of models; and
model description information for describing the one or more models in the model deployment information or the one or more models in the set of models.
wherein the third access network device is the same as or different from the first access network device.

32. The method of any one of claims 29 to 31, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

33. A wireless communication method, comprising:
receiving, by a first core network device, sixth information sent by a first access network device, wherein the sixth information comprises a seventh identifier, information contained in the seventh identifier is a subset of information contained in a first identifier, and the first identifier is associated with model deployment information of a terminal device.

34. The method of claim 33, wherein the first identifier is associated with one or more of:
a hardware configuration of the terminal device;
a software configuration of the terminal device; and
a set of models supported by the terminal device.

35. The method of claim 33 or 34, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

36. The method of claim 35, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

37. The method of claim 35 or 36, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

38. The method of any one of claims 33 to 37, wherein the sixth information further comprises one or more of:
a model identifier for identifying one or more models in the model deployment information or one or more models in a set of models; and
model description information for describing the one or more models in the model deployment information or the one or more models in the set of models.

39. The method of any one of claims 33 to 38, further comprising:
sending, by the first core network device, seventh information to a third access network device, wherein the seventh information comprises one or more of:
an eighth identifier, wherein information contained in the eighth identifier is a subset of the information contained in the seventh identifier;
a model identifier for identifying one or more models in the model deployment information or one or more models in a set of models; and
model description information for describing the one or more models in the model deployment information or the one or more models in the set of models.
wherein the third access network device is the same as or different from the first access network device.

40. The method of any one of claims 33 to 39, further comprising:
sending, by the first core network device, eighth information to a second core network device, wherein the eighth information comprises one or more of:
a ninth identifier, wherein information contained in the ninth identifier is a subset of the information contained in the seventh identifier;
a model identifier for identifying one or more models in the model deployment information or one or more models in a set of models; and
model description information for describing the one or more models in the model deployment information or the one or more models in the set of models.

41. The method of any one of claims 38 to 40, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

42. A terminal device, comprising:
a communication module configured to send first information to a network device, wherein the first information comprises a first identifier, and the first identifier is associated with model deployment information of the terminal device.

43. The terminal device of claim 42, wherein the first identifier is associated with one or more of:
a hardware configuration of the terminal device;
a software configuration of the terminal device; and
a set of models supported by the terminal device.

44. The terminal device of claim 42 or 43, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

45. The terminal device of claim 44, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

46. The terminal device of claim 44 or 45, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

47. The terminal device of any one of claims 42 to 46, wherein the network device is an access network device or a core network device.

48. A core network device, wherein the core network device is a first core network device, and the first core network device comprises:
a communication module configured to receive first information sent by a terminal device, wherein the first information comprises a first identifier, and the first identifier is associated with model deployment information of the terminal device.

49. The core network device of claim 48, wherein the first identifier is associated with one or more of:
a hardware configuration of the terminal device;
a software configuration of the terminal device; and
a set of models supported by the terminal device.

50. The core network device of claim 48 or 49, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

51. The core network device of claim 50, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

52. The core network device of claim 50 or 51, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

53. The core network device of any one of claims 48 to 52, wherein the communication module is further configured to:
store the first information in context information of the terminal device.

54. The core network device of any one of claims 48 to 53, wherein the communication module is further configured to:
send second information to a second core network device, wherein the second information comprises a third identifier, and information contained in the third identifier is a subset of information contained in the first identifier.

55. The core network device of any one of claims 48 to 54, wherein the communication module is further configured to:
send third information to a first access network device, wherein the third information comprises one or more of:
a fourth identifier, wherein information contained in the fourth identifier is a subset of information contained in the first identifier;
a model identifier for identifying one or more models in the model deployment information or one or more models in a set of models; and
model description information for describing the one or more models in the model deployment information or the one or more models in the set of models.

56. The core network device of claim 55, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

57. An access network device, wherein the access network device is a first access network device, and the first access network device comprises:
a communication module configured to receive third information sent by a first core network device, wherein the third information comprises a fourth identifier, information contained in the fourth identifier is a subset of information contained in a first identifier, and the first identifier is associated with model deployment information of a terminal device.

58. The access network device of claim 57, wherein the first identifier is associated with one or more of:
a hardware configuration of the terminal device;
a software configuration of the terminal device; and
a set of models supported by the terminal device.

59. The access network device of claim 57 or 58, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

60. The access network device of claim 59, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

61. The access network device of claim 59 or 60, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

62. The access network device of any one of claims 57 to 61, wherein the third information further comprises one or more of:
a model identifier for identifying one or more models in the model deployment information or one or more models in a set of models; and
model description information for describing the one or more models in the model deployment information or the one or more models in the set of models.

63. The access network device of any one of claims 57 to 62, wherein the communication module is further configured to:
send fourth information to a second access device, wherein the fourth information comprises one or more of:
a fifth identifier, wherein information contained in the fifth identifier is a subset of the information contained in the fourth identifier;
a model identifier for identifying one or more models in the model deployment information or one or more models in a set of models; and
model description information for describing the one or more models in the model deployment information or the one or more models in the set of models.

64. The access network device of claim 62 or 63, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

65. An access network device, wherein the access network device is a first access network device, and the first access network device comprises:
a communication module configured to receive first information sent by a terminal device, wherein the first information comprises a first identifier, and the first identifier is associated with model deployment information of the terminal device.

66. The access network device of claim 65, wherein the first identifier is associated with one or more of:
a hardware configuration of the terminal device;
a software configuration of the terminal device; and
a set of models supported by the terminal device.

67. The access network device of claim 65 or 66, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

68. The access network device of claim 67, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

69. The access network device of claim 67 or 68, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

70. The access network device of any one of claims 65 to 69, wherein the communication module is further configured to:
send fifth information to a second access network device, wherein the fifth information comprises one or more of:
a sixth identifier, wherein information contained in the sixth identifier is a subset of information contained in the first identifier;
a model identifier for identifying one or more models in the model deployment information or one or more models in a set of models; and
model description information for describing the one or more models in the model deployment information or the one or more models in the set of models.

71. The access network device of any one of claims 65 to 70, wherein the communication module is further configured to:
send sixth information to a first core network device, wherein the sixth information comprises one or more of:
a seventh identifier, wherein information contained in the seventh identifier is a subset of information contained in the first identifier;
a model identifier for identifying one or more models in the model deployment information or one or more models in a set of models; and
model description information for describing the one or more models in the model deployment information or the one or more models in the set of models.

72. The access network device of any one of claims 65 to 71, wherein the communication module is further configured to:
receive seventh information sent by a first core network device, wherein the seventh information comprises one or more of:
an eighth identifier, wherein information contained in the eighth identifier is a subset of information contained in a seventh identifier;
a model identifier for identifying one or more models in the model deployment information or one or more models in a set of models; and
model description information for describing the one or more models in the model deployment information or the one or more models in the set of models.

73. The access network device of any one of claims 70 to 72, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

74. A core network device, wherein the core network device is a first core network device, and the first core network device comprises:
a communication module configured to receive sixth information sent by a first access network device, wherein the sixth information comprises a seventh identifier, information contained in the seventh identifier is a subset of information contained in a first identifier, and the first identifier is associated with model deployment information of a terminal device.

75. The core network device of claim 74, wherein the first identifier is associated with one or more of:
a hardware configuration of the terminal device;
a software configuration of the terminal device; and
a set of models supported by the terminal device.

76. The core network device of claim 74 or 75, wherein the first identifier comprises one or more of:
a version identifier associated with a hardware configuration of the terminal device;
a version identifier associated a software configuration of the terminal device;
a second identifier, wherein the second identifier is associated with a combination of the hardware configuration of the terminal device and the software configuration of the terminal device; and
an identifier associated with a set of models supported by the terminal device.

77. The core network device of claim 76, wherein the second identifier comprises one or more information fields, wherein in response to the second identifier comprising a plurality of information fields, the second identifier comprises a first information field and a second information field, information in the first information field is associated with the hardware configuration of the terminal device, and information in the second information field is associated with the software configuration of the terminal device.

78. The core network device of claim 76 or 77, wherein the identifier associated with the set of models supported by the terminal device is defined or transferred according to one or more of the following granularities:
a granularity of the version identifier associated with the hardware configuration of the terminal device, a granularity of the version identifier associated the software configuration of the terminal device, a granularity of the second identifier, a granularity of the terminal device, a granularity of a protocol layer, a granularity of a component carrier, a granularity of a band, a granularity of a band combination, and a granularity of a channel model.

79. The core network device of any one of claims 74 to 78, wherein the sixth information further comprises one or more of:
a model identifier for identifying one or more models in the model deployment information or one or more models in a set of models; and
model description information for describing the one or more models in the model deployment information or the one or more models in the set of models.

80. The core network device of any one of claims 74 to 79, wherein the communication module is further configured to:
send seventh information to a third access network device, wherein the seventh information comprises one or more of:
an eighth identifier, wherein information contained in the eighth identifier is a subset of the information contained in the seventh identifier;
a model identifier for identifying one or more models in the model deployment information or one or more models in a set of models; and
model description information for describing the one or more models in the model deployment information or the one or more models in the set of models.
wherein the third access network device is the same as or different from the first access network device.

81. The core network device of any one of claims 74 to 80, wherein the communication module is further configured to:
send eighth information to a second core network device, wherein the eighth information comprises one or more of:
a ninth identifier, wherein information contained in the ninth identifier is a subset of the information contained in the seventh identifier;
a model identifier for identifying one or more models in the model deployment information or one or more models in a set of models; and
model description information for describing the one or more models in the model deployment information or the one or more models in the set of models.

82. The core network device of any one of claims 79 to 81, wherein the model description information comprises one or more of:
information indicating a function of a model;
information indicating a type of an input parameter of the model;
information indicating a format of the input parameter of the model;
information indicating a pre-processing rule of the input parameter of the model;
information indicating a type of an output parameter of the model;
information indicating a format requirement of the output parameter of the model;
information indicating a pre-processing rule of the output parameter of the model;
information indicating an application scenario of the model;
information indicating a deployment location of the model;
information indicating a capability requirement for application of the model;
information indicating a performance monitoring indicator of the model;
information indicating a home location of the model;
information indicating an effective application range of the model;
information indicating a generalization characteristic of the model;
information indicating a version of the model;
information indicating accuracy of the model;
information indicating a compilation format of model data;
information indicating a storage format of the model data;
information indicating computational complexity of the model;
information indicating model complexity of the model; and
information indicating a size of the model.

83. A terminal device, comprising:
a transceiver, a memory, and a processor, wherein the memory is configured to store a program, and the processor is configured to invoke the program stored in the memory and control the transceiver to receive or send a signal, to cause the terminal device to perform the method of any one of claims 1 to 6.

84. A core network device, comprising:
a transceiver, a memory, and a processor, wherein the memory is configured to store a program, and the processor is configured to invoke the program stored in the memory and control the transceiver to receive or send a signal, to cause the core network device to perform the method of any one of claims 7 to 15 or the method of any one of claims 33 to 41.

85. An access network device, comprising:
a transceiver, a memory, and a processor, wherein the memory is configured to store a program, and the processor is configured to invoke the program stored in the memory and control the transceiver to receive or send a signal, to cause the access network device to perform the method of any one of claims 16 to 23 or the method of any one of claims 24 to 32.

86. An apparatus, comprising:
a processor configured to invoke a program stored in a memory, to cause the apparatus to perform the method of any one of claims 1 to 6, the method of any one of claims 7 to 15, the method of any one of claims 16 to 23, the method of any one of claims 24 to 32, or the method of any one of claims 33 to 41.

87. A chip, comprising:
a processor configured to invoke a program stored in a memory, to cause a device equipped with the chip to perform the method of any one of claims 1 to 6, the method of any one of claims 7 to 15, the method of any one of claims 16 to 23, the method of any one of claims 24 to 32, or the method of any one of claims 33 to 41.

88. A computer-readable storage medium configured to store a program which causes a computer to perform the method of any one of claims 1 to 6, the method of any one of claims 7 to 15, the method of any one of claims 16 to 23, the method of any one of claims 24 to 32, or the method of any one of claims 33 to 41.

89. A computer program product comprising a program which causes a computer to perform the method of any one of claims 1 to 6, the method of any one of claims 7 to 15, the method of any one of claims 16 to 23, the method of any one of claims 24 to 32, or the method of any one of claims 33 to 41.

90. A computer program causing a computer to perform the method of any one of claims 1 to 6, the method of any one of claims 7 to 15, the method of any one of claims 16 to 23, the method of any one of claims 24 to 32, or the method of any one of claims 33 to 41.
